Europäisches Patentamt

(19) European Patent Office

Office européen des brevets

(11) Publication number: **0 039 948**

**B1**

(12) **EUROPEAN PATENT SPECIFICATION**

(45) Date of publication of patent specification: **29.08.84**

(51) Int. Cl.³: **H 04 Q 11/04**

(21) Application number: **81103628.4**

(22) Date of filing: **12.05.81**

(54) **PCM switching element.**

(30) Priority: **13.05.80 IT 6774580**

(43) Date of publication of application:
**18.11.81 Bulletin 81/46**

(45) Publication of the grant of the patent:
**29.08.84 Bulletin 84/35**

(84) Designated Contracting States:
**AT BE CH DE FR GB LI NL SE**

(56) References cited:
**DE-A-2 443 526**
**DE-A-2 918 086**
**FR-A-2 367 399**
**GB-A-1 234 419**
**GB-A-2 016 866**
**US-A-3 909 786**
**US-A-3 974 340**
**US-A-4 127 742**

**POST OFFICE ELECTRICAL ENGINEERS
JOURNAL, vol. 73, April 1980 London, GB
J.N.A. RISBRIDGER: "System X: Subsystems
Part 1- The Digital Switching Subsystem",
pages 19-26**

(73) Proprietor: **CSELT Centro Studi e Laboratori
Telecomunicazioni S.p.A.
Via Guglielmo Reiss Romoli, 274
I-10148 Turin (IT)**

(72) Inventor: **Belforte, Piero
Via Fabbriche, 7
Torino (IT)**
Inventor: **Bostica, Bruno
Via Gorizia, 165
Torino (IT)**
Inventor: **Pilati, Luciano
Via Sospello, 121
Torino (IT)**

(74) Representative: **Riederer Freiherr von Paar zu
Schönau, Anton
Freyung 615 Postfach 2664
D-8300 Landshut (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 039 948 B1

# Description

The present invention relates to a PCM switching element for a PCM telephone exchange, as defined in the prior art portion of claim 1, and to a method of utilizing it. Such a switching element is known from US—A 4,093,827.

As known, the switching of PCM channels is performed in up-to-date digital exchanges by connection networks which make use of commercial components (MSI and memories). To increase cost-effectiveness and flexibility in view of further expansions of the network capacity, integrated circuits capable of carrying out the main functions of time switching have been made.

However, known types, such as the circuit described in USA Patent NO. 4,093,827, present a number of disadvantages that make them difficult to control with commercial microprocessors.

In fact, they are generally designed to operate with a central control unit acting as telephone marker, which sends its commands in a synchronous serial form. Said integrated circuits are not very suitable for use in distributed-control systems since interface circuits are required to adapt them to control units (microprocessors), capable of performing routing and diagnostic functions for a limited number of PCM junctions. In fact, the advantages derived from decentralized control units would be nullified by increased circuit-complexity, increased cost and decreased reliability. Furthermore, the connection network cannot be expanded easily by modular growth, in which the switching element always remains the same.

Further, switching exchanges using extra bits in time switch control memories are known, e.g. to be used by the control units to find a possible connection both in a time switch upstream a space switch and in a time switch downstream (US—A 3,909,786), or to find and establish a connection inside a network stage (POEEJ, vol. 73, April 1981, page 23). It is further known to use two extra bits in a space switch to address some multiplexers and thus obtain more inputs (US—A 3,974,340), or to use an additional bit to address a demultiplexer for supplying addresses to different memories (FR—A 2 367 399), or to use additional bits to provide conference facilities (GB—A 1 234 419, DE—A 2 918 086).

For providing a universal switching element, such a switching dpbment should be easily manufactured as an integrated circuit and at the same time should allow a modular structure of the connection network so as to allow an expansion thereof. This is attained by the PCM switching element characterized in claim 1. This PCM switching element can be integrated circuit capable of modular growth, and can be controlled, as any asynchronous parallel interface, by a commercially available microprocessor through data and contro buses. It allows outgoing PCM groups of several switching elements to be connected in parallel, inhibition being achieved by replacing digital samples outgoing from the signal memory with words at constant logic level. As a result, said element is capable of carrying out the following operations:

— connection of any incoming channel with any outgoing channel when a specific control message is received. This operation corresponds to the writing of the incoming-channel address in the cell corresponding to the outgoing-channel address in a control memory. It makes it possible to switch any incoming channel to a plurality of outgoing channels (backward control);

— disabling of any outgoing channel when a specific control message is received. This function is essential for multiple connection of a plurality of switching elements;

— initilization of all the built-in memory elements. This function can be accomplished by sending an appropriate logic level into a certain input, when a specific control message is received;

— connection of any incoming channel with all the outgoing channels when a specific control message is received;

— connection of all the incoming channels with the corresponding outgoing channels (direct input/output connection). This function can be used for diagnostic purposes;

— connection of all the channels of an incoming group with the corresponding channels of any outgoing group (spatial group connection).

Moreover, the PCM switching element provided by this invention is easy to integrate.

An embodiment of the present invention will now be described by way of example with reference to the accompanying drawings, in which:

— Fig. 1 is a block diagram of the switching element provided by the invention;
— Fig. 2 is an electrical diagram of the block denoted by LC in Fig. 1;
— Fig. 3 is a block diagram of a square connecting matrix made of four switching elements;
— Fig. 4 is a block diagram of a concentrator made of three switching elements.

In the following example reference will be made to a switching element designed to switch 256 channels belonging to eight incoming PCM groups at 2 Mb/s, to 256 channels belonging to eight outgoing PCM groups, again at 2 Mb/s.

The switching element is assumed to be controlled by a commercially available 8-bit microprocessor.

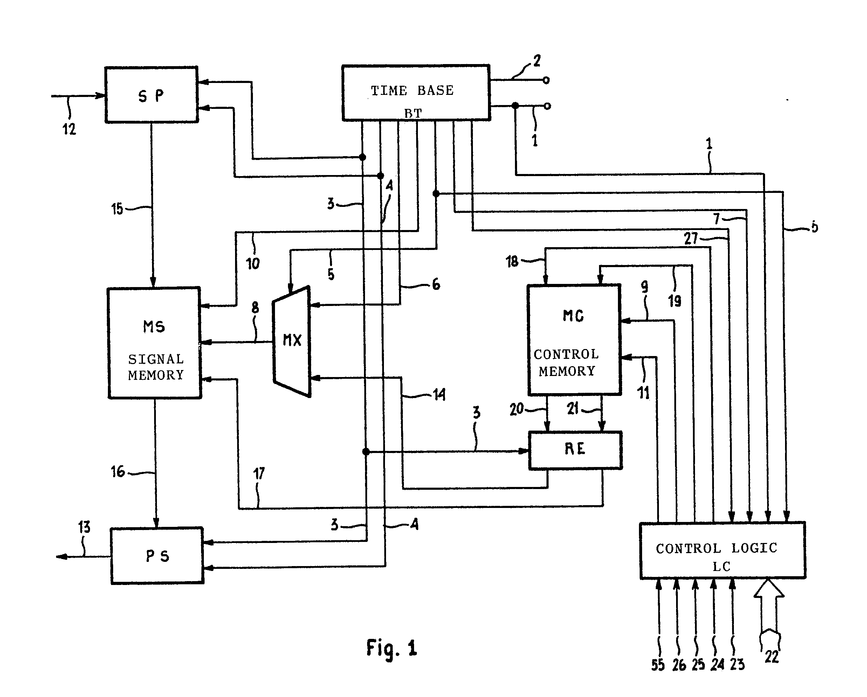

The switching element basically consists of eight main blocks represented in Fig. 1. They are as follows:

—a time base BT;
—an input serial-to-parallel converter SP;
—an output parallel-to-serial converter PS;
—a signal memory MS for binary digits obtained from sampling and coding speech signals;
—a control memory MC;
—a control logic LC.

Time base BT receives a clock signal at 4.096 MHz via wire 1, and a frame synchronism signal at 8 KHz via wire 2. Said signals are generated by a suitable centralized generator not shown in the drawing.

.By means of binary counters, BT then generates bit timing and a clock signal at 2.048 MHz, and sends them via wire 3 to converters SP and PS. Moreover, BT generates read and write timings, which it sends to memories MS and MC via wire 10 and wires 27 and 11, through control logic LC.

Furthermore, BT generates control signals for multiplexers addressing memories MS and MC, and generates (by means of binary counter) the addresses for writing the input-channel content in signal memory MS and the addresses for the sequential reading of the control memory MC. In particular, BT sends the control signals via wire 5 to a multiplexer MX and to other multiplexers contained in LC, while the addresses are sent in parallel through connections 6 and 7. These access memories MS and MC through MX and connection 8, and through LC and connection 9, respectively.

Eight incoming PCM groups access the serial-to-parallel converter SP through 8-wire connection 12. Similarly, 8 outgoing PCM groups are obtained on 8-wire connection 13 at the output of the parallel-to-serial converter PS.

Converters SP and PS can be made in at least two different ways:

—by using two blocks of 8 shift registers of variable length. Each block receives a clock signal at 2.048 MHz via wire 3 and bit time addresses on 3-wire connection 4 from time base BT. In the serial-to-parallel converter SP, the shift register of each incoming group has its parallel outputs enabled only within the corresponding bit time. During a time slot, the contents of the channels of the 8 incoming groups are sequentially enabled to appear at the parallel outputs at a rate of one word every 500 ns. The parallel-to-serial converter PS operates in the opposite way: the contents of the outgoing channels, sequentially read from memory MS, are stored into the shift register of the corresponding outgoing group, enabled by a bit-address decoding-circuit;
—by using two 8×8 transposition matrices

operating at alternate time slots, as in US patent No. 3,914,553 and DE patent 24 43 526. During a time slot, a transposition matrix operates as a serial input/output unit for PCM groups; in the subsequent time slot the transposition matrix sends the information stored in the preceding time slot into signal memory MS. During the same time slot, the contents of the outgoing groups, read from MS, are stored in the same transposition matrix and in the subsequent time slot are shifted in serial mode.

The latter solution is valid with two different timings of signal memory MS:

—1 write operation and 1 read operation every bit time;
—8 write operations in the first 2 $\mu$s and 8 read operations in the subsequent 2 $\mu$s.

The second timing has the advantage that input-output delays of the switching element are independent of the relative position of the switched groups, but is more complex than the first.

Signal memory MS consists of 256 8-bit cells and operates at 4 Mbit/s.

The contents of the incoming groups are transferred by converter SP to MS data input via connection 15, while the contents of the outgoing groups are picked up by connection 16, to be transferred to converter PS.

Each time slot is divided into 8 write phases and 8 read phases, with read and write operations alternated every bit time.

The eight address bits coming from time base BT for the addressing of MS during read phase are divided into:

—3 group bits (less significant bits) and
—5 channel bits (more significant bits).

The address corresponding to the five channel bits is equal to the order number of the input channel minus one.

Writing addresses are repeated, following the sequence at which they are sent by counters contained in time base BT, while the other reading address are randomly repeated in function of the requested connections and are provided by control memory MC.

Multiplexer MX, controlled by the signal coming via wire 5 from time base BT, transfers a write or a read address at its output during a bit time.

Memory MS is further equipped with an input connected to wire 17, by means of which the transmission of the stored contents to the output can be prevented. As will be better seen later, this makes it possible to connect one or more switching elements in parallel for further expansions.

Control memory MC is arranged in 256 9-bit words and operates at 4 Mbit/s. Data relating to the connection to be established, coming from control logic LC through 8-wire connection 18 and a wire 19, appear at the MC data input, while the output is connected through 8-wire connection 20 and wire 21 to register RE.

A time slot is divided into 8 read phases and 8 read or write phases, the latter ones being determined by control logic LC. Each 500 ns-bit time is subdivided into one read phase and another phase devoted to control logic.

The 8 bits for addressing MC during the read phase are divided into three group bits (less significant bits) and five channel bits (more significant bits). The address corresponding to the five channel bits is equal to the order number of the outgoing channel plus one.

The nine bits of MC are organized in the following way:

—bit 0 to 7: address of MC (incoming channel) or word chosen by the control to be inserted into an outgoing PCM channel;
—bit 8: "expansion bit", written upon command of the control logic and designed to enable the transfer of stored data to MS output for each outgoing channel.

The address bits are available at the output of MC, connected to 8-wire connection 20. They arrive at multiplexer MX through register RE and connection 14, while the "expansion bit" arrives at the MS input via wire 21, RE and wire 17. Data transfer to the output can then be enabled from the MS input.

Register RE, placed at the output of memory MC, stores the addresses provided by the control memory for a short time and sends them to multiplexer MX at the suitable instant during the right operative phase.

RE receives the clock signal at 2 MHz for storing operations from time base BT via wire 3.

Control logic LC acts as an interface between the microprocessor and the devices that effect connection operations and allows the switching element to be considered as an ordinary terminal of a commercial 8-bit microprocessor.

The functions of control logic LC are:

—supervision of a data bus, denoted by 22, and of a control bus, formed by wires 23, 24, 25 and 26, coming from the microprocessor;
—interpretation of the messages coming from the microprocessor and execution of the corresponding operations.

LC is equipped with an input connected to wire 23, which is used to choose between a data word and a control word present on data bus 22 during the write phase. LC is also equipped with a further input connected to wire 26, which is used to enable the switching element.

Both these wires arrive from decoders of the microprocessor address bus.

Finally, a wire 55 is directly connected to a lead of the integrated circuit for element initialization.

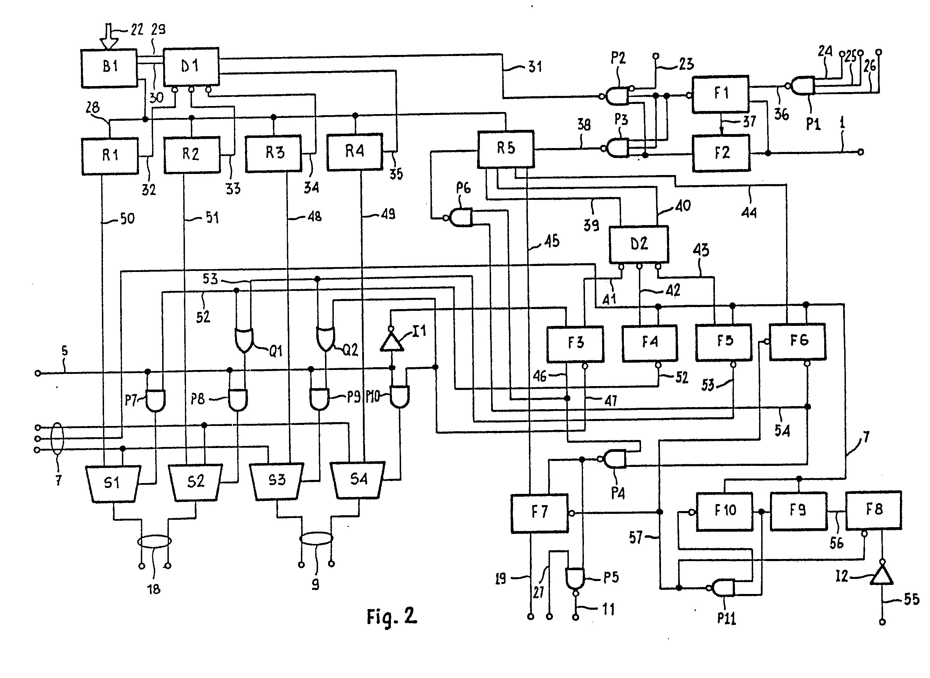

The block diagram of LC is represented in detail in Fig. 2.

Should a particular operation of the switching element be required, the microprocessor sends a word sequence onto data bus 22. Said sequence allows for the identification of the operation and of the incoming and outgoing channels and groups involved.

Each word is sent to registers R1, R2, R3, R4 and R5, where it is partly stored, through input receiver B1 and connection 28. In particular, the first five bits will be stored to constitute either the addresses or the contents of control memory MC (Fig. 1), while the two more significant bits are used to identify the register in which storage is to take place.

Storage is obtained by addressing a 1-to-4-line demultiplexer D1 by the above-mentioned bits, transferred through wires 29 and 30. The demultiplexer causes the signal present at its input connected to wire 31 to be sent through wires 32, 33, 34 and 35 respectively, to the inputs enabling registers R1, R2, R3 and R4 to store.

The signal is present on wire 31 when signals having the respective meanings of requests for data transfer into the switching element and of enabling to write and of element selection arrive from the processor on wires 24, 25 and 26. The microprocessor sends these commands in asynchronous mode with respect to the timing of the switching element; the synchronization is performed by means of gate P1 and D-type flip-flops F1 and F2.

When the simultaneous presence of three signals at logic level 1 on wires 24, 25 and 26 occurs, a logic level 0 appears at the output of P1 on wire 36. Consequently, a corresponding signal as wide as the period of the timing signal present on wire 1 and in phase with it, appears at the output of F1 and F2 connected in series through wire 37.

The latter signal is present on wires 31 or 38 at the output of gates P2 or P3, in function of the logic level of the signal present on wire 23, arriving from the microprocessor. If the word present on data bus 22 refers to a command, the level on wire 23 will be high; if, on the contrary, the word refers to a datum, the level will be low. Therefore, should a datum be present, the pulse sent by P2 would enable through D1 one of the registers R1, R2, R3, R4, wherein the datum is stored. Should a command be present on bus 22, register R5 would be enabled through P3 and consequently would store the control word present on connection 28. The two bits present at the output of R5 on wires 39 and 40 address a decoder D2, that makes a signal, correlated to the specific operation to be carried out, available on one of its outputs, which are connected to wires 41, 42, 43. This signal is stored in one of the D-type flip-flops F3, F4 and F5, of which the first receives the timing signal via the wire 5 and through the inverter I1 and the other two via one of the wires of connection 7. The same timing signal utilized for F4 and F5 is also sent to a D-type flip-flop F6, which is able to store the signal present on the output wire 44 of R5 directly, while the signal present on the other output wire 45 is stored in the D-type flip-flop F7.

The signal on wire 45 is the "expansion bit", whose function has been previously described, while the signal present on wire 44 distinguishes between a single connection, i.e. connection between an incoming channel and an outgoing channel, and a multiple connection, i.e. a connection between an incoming channel or a plurality of incoming channels and a plurality of outgoing channels. Of course, this second operation is performed on the basis of a single message sent by the microprocessor, by effecting a plurality of write operations in the control memory. Even if the combinations that might occur at R5 outputs 39 and 40 cannot exceed 4, and only 3 are utilized at the output of D2 (and therefore at the outputs of F3, F4 and F5), the operations that can be carried out by the switching elements are doubled by means of the signal on wire 45 at the output of F7.

Let us now examine how the other elements of control logic LC are involved both in case of single connection and in case of multiple connection.

When a single connection is required which means a connection between two channels only, the addresses of the incoming group, of the incoming channel, of the outgoing group and of the outgoing channel to be connected with each other are stored in R1, R2, R3 and R4 respectively. The word having the meaning of request for single connection is stored in R5.

After being duly decoded by D2, this word is stored as single logic level in F3; in particular, a low logic level appears on wire 46, and a high logic level at the complementary output on wire 47. Consequently, there is a high logic level at the output of NAND gate P4. This makes it possible to enable gate P5, which controls the transfer of a pulse of the sequence present on wire 27 from time base BT (Fig. 1) to the output connected to wire 11. This pulse is transferred to control memory MC (Fig. 1), where it enables the writing. P5 transfers a single pulse of the sequence present at its input 27, since register R5 and consequently decoder D2 are immediately reset through P6. Upon receiving the next timing pulse, F3 changes again to its initial state with output 46 at high logic level, and gate P5 is thus inhibited through P4.

The presence of high logic level at the output 47 of F3, before resetting R5, enables through gates P10, Q2 and P9 multiplexers S3 and S4 to transfer the contents of registers R3 and R4 which are present on connections 48 and 49, to outputs 9.

The other input of P9 and P10 connected to wire 5 has a high logic level, as the switching element is in the phase of enabling writing into the control memory; therefore P9 and P10 are enabled.

The complementary outputs of F4 and F5, connected to wires 52 and 53, have low logic level, since they are not involved in the single connection. As a result gates P7 and P8 (through Q1) are inhibited. Consequently, multiplexers S1 and S2 are switched so as to transfer the content of registers R1 and R2, present on connections 50 and 51, to the output onto connection 18.

The signals present on connection 18, in conjunction with the "expansion bit" present on wire 19 at the output of F7, are the data to be stored into control memory MC (Fig. 1) at the addresses present on connection 9.

During the read phase of the control memory, signal on wire 5 passes to low logic level. Gates P7, P8, P9 and P10 are therefore inhibited and multiplexers S1, S2, S3 and S4 are enabled to transfer the addresses arriving at connection 7 from the time base to the outputs. The signals present on connection 18 and on wire 19, connected to the control memory data-input, are not used because the memory is in read phase.

The addresses present on connection 9 follow one another sequentially, and the control memory is thus read in order.

When the inhibiting of a channel (disconnection) of a given outgoing group is requested, the procedure is the same as previously described for the connection. The only difference is in the logic state of the "expansion bit" present in the control word, sent by the microprocessor and stored in register R5. Said "expansion bit" arrives through wire 45 to flip-flop F7, whence it is sent to the data input of the control memory.

When a multiple connection is requested which means a connection wherein more than two channels are involved, that is to say an incoming channel, belonging to any group, is to be connected to each one of the 256 outgoing channels, the content of registers R1 and R2 are written in all the cells of the control memory MC (Fig. 1). Write addresses for MC are sequentially sent by the time base through connection 7 and correspond exactly to the addresses sent to MC during the same bit time in the read phase.

The word relating to this operation, stored in register R5, has a configuration such that none of the outputs of D2, connected to F3, F4 and F5, changes to a low logic value. Multiplexers S3 and S4, controlled through Q2, P9 and P10 by the complementary outputs of F3 and F5, transfer the addresses of time base BT (Fig. 1) to connection 9. Analogously, S1 and S2 are enabled to transfer the contents of registers R1 and R2, relating to incoming group and channel addresses, to connection 18. Unlike the previous cases of single connection, a high logic level is now present on wire 44. As a result, F6, which like F4 and F5, receives a timing signal with period equal to 125 $\mu$s from the time base, enables gate P5 through P4 so that write pulses present on wire 27 can be sent to control memory via wire 11. The signal at F6 output, connected to wire 54, resets the register R5 through gate P6, maintaining the register in this state to the operation end. The subsequent leading edge of the timing signal at 125 $\mu$s causes the low-level signal present on wire 44 at R5 output to be stored in F6; as a result, P5 is inhibited through P4. P5 has remained enabled for 125 $\mu$s, allowing 256 write operations to be carried out in the control memory. The data stored are the group and channel addresses present on wires 50 and 51 at the outputs of R1 and R2.

The "expansion bit", present at F7 output on wire 19, is in the logic state appropriate to continuously enable the output of signal memory MS (Fig. 1) which is the speech memory, starting from the enabling of 256 write operations in the control memory. E.g. the "expansion bit" can be in low logic state.

The inhibiting operation of all outgoing channels is performed analogously to multiple connection operation. This can be obtained by inhibiting all the 256 PCM channels at the output of signal memory MS (Fig. 1). To do this, 256 write operations are effected in the control memory, keeping the "expansion bit" in the suitable logic state, e.g. at high level. The "expansion bit" is made available at the output of F7, on wire 19, owing to the storage performed by picking up the signal on wire 45, connected with register R5, wherein the control word coming from the microprocessor is stored. The procedure is identical to that for multiple connection described above, except that the incoming group and channel are not considered.

It is sufficient, in fact, that the control word presents the "expansion bit" at high logic level to inhibit the signal memory output, whatever the contents of registers R1—R4 might be.

Still another operation of main importance is the connetion of all the incoming groups to all the outgoing groups, wherein each channel is connected to the corresponding channel.

In this case, the switching element is fully "transparent", and tests and diagnostic operations are thus made particularly easy.

Sending a single suitable control word by the microprocessor is also sufficent for this operation, since no address either of group nor of channel is requested by data bus 22. The information for the addressing is in fact obtained solely from the counters of time base BT (Fig. 1), at whose outputs, connected to connection 7, it is picked up by multiplexers S1, S2, S3 and S4.

In particular, there is a low logic level at the output of D2 connected to wire 42. This state is stored in F4, which, through P7, Q1 and P8, switches S1 and S2 on connection 7.

Since a multiple connection is involved, multiplexers S3 and S4 are also switched on connection 7 and pick up the addresses coming from the time base.

The "expansion bit" is constantly held at low logic level, so as to continuously enable all the 256 outgoing channels of the signal memory.

Spatial group connection is also provided: in this operation all the channels of an incoming group are connected with all the corresponding channels of an outgoing group.

The addresses of both the incoming and the outgoing group, placed in the least significant portion of data words, appear on data bus 22. These addresses are stored by registers R1 and R3 and therefrom are picked up by S1 and S3, after being duly switched.

In particular, flip-flop F5 stores the new logic-state present at the output 43 of D2 after the arrival of the control word relating to this operation and switches through Q2 and P9 the multiplexer S3 to the R3 output, and switches through Q1 and P8 the multiplexer S2 to connection 7 arriving from BT.

The "expansion bit" is at low level, i.e. the output of P5 remains enabled during the time necessary to establish all the channel connections, say 125 $\mu$s. As this operation also concerns a multiple connection, the operation procedure is basically the same as that mentioned while describing the multiple connection.

Finally, we consider the initializing operation, which is carried out by sending a suitable signal to a pin of the integrated circuit.

The initializing pin is connected to wire 55, which, through an inverter I2, allows the transfer of the signal to the clock input of a D-type flip-flop F8, whose data input is permanently set at high level. The output is connected through wire 56 to the data input of a D-type flip-flop F9, in turn followed by a further D-type flip-flop F10. Flip-flops F9 and F10 receive a timing signal having a period of 125 $\mu$s from BT through a wire of connection 7. Consequently, a signal as wide as the timing period and in phase will it will be present on wire 57 at the output of gate P11.

This signal is used to return F8 to its inital state and to force the output of F6 (wire 54) to the low logic level and the output of F7 (wire 19) to the high logic level. The level transition at the output of F6 causes the start of the procedure for multiple connection; i.e. through inhibited gate P4 and enabled gate P5 the write pulses are transferred for 125 $\mu$s via wire 11. At the same time F7 presents the "expansion bit" at the high logic level for all the 256 write operations in the cells of control memory MC (Fig. 1).

A plurality of the switching elements provided by the present invention can be used to ·

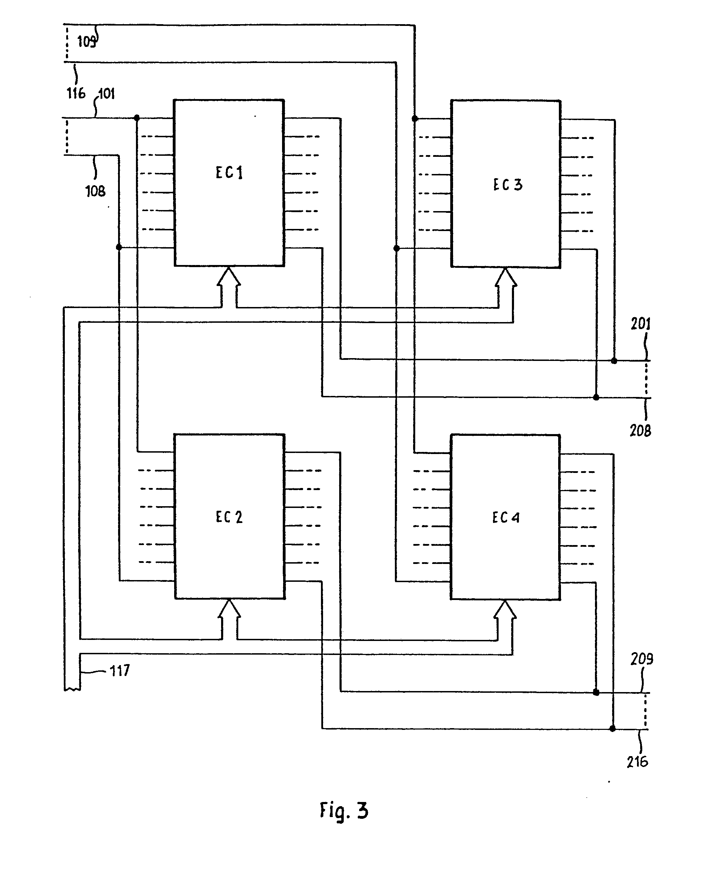

make a square connection matrix. This example will be now described with reference to Fig. 3.

Four switching elements EC1, EC2, EC3 and EC4 are employed in order to obtain a capacity of 512 incoming channels and 512 outgoing channels.

The channels belong to 16 incoming groups, denoted by order numbers 101 to 116, and 16 outgoing groups, denoted by order numbers 201 to 216, suitably connected to the switching elements. In particular, the 16 incoming groups consist of two sets of 8 groups, each being connected to the 8 input terminals of two switching elements placed in parallel. In the drawing, groups 101, ..., 108 are shown to be connected to elements EC1 and EC2, and groups 109, ..., 116 to elements EC3 and EC4.

The 16 outgoing groups are equally arranged into two sets of 8 groups, each connected to the 8 output terminals, placed in parallel, of two elements coupled in a way different from that described for the incoming groups. In particular, groups 201, ..., 208 are connected to elements EC1 and EC3 and groups 209, ..., 216 to elements EC2 and EC4.

This type of connection permits complete accessibility of any channel belonging to any one of the 16 incoming groups to any channel belonging to any one of the 16 outgoing groups. The connection may be established and superpositions are avoided due to the information signals and commands coming from a control unit, connected to the switching elements by a single bus 117. The control unit, which also in this case may be a microprocessor available on the market, enables the connection between an incoming channel and an outgoing channel in a switching element, and inhibits that same outgoing channel in the element whose outputs are connected in parallel.

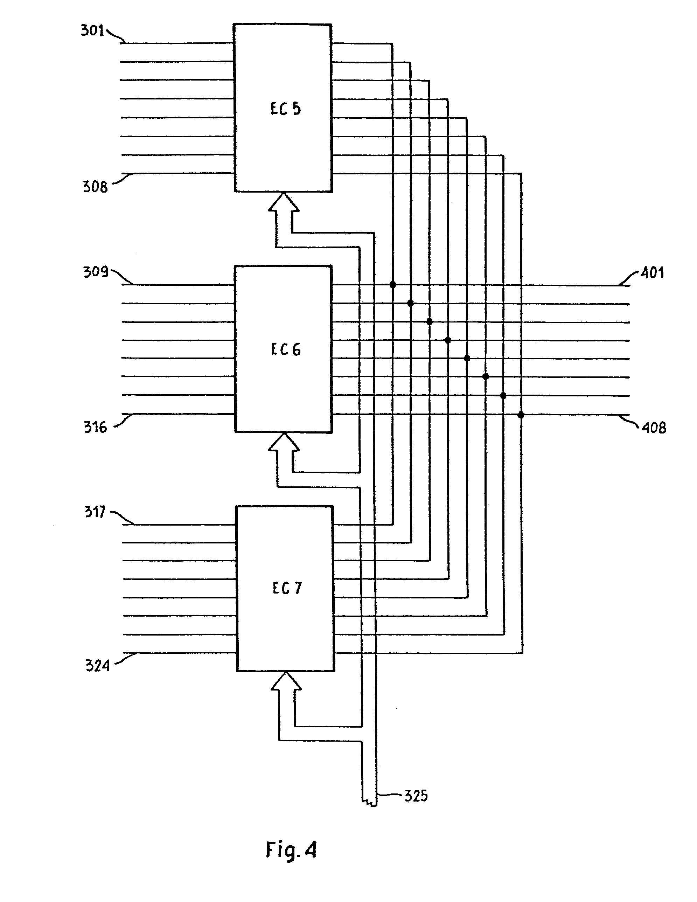

By the use of several switching elements a concentration stage between a set of more than 8 incoming groups and a set of eight or less than 8 outgoing groups may be made. Fig. 4 shows a concentration stage between 24 incoming groups and 8 outgoing groups, made by means of three switching elements EC5, EC6 and EC7. A set of 8 groups, denoted by the order number of the first and of the last group, is connected with each element: the groups from 301 to 308 enter EC5, groups 309 to 316 enter EC6, groups 317 to 324 enter EC7. The 8 outputs of each element are connected in parallel with the corresponding outputs of other elements, obtaining the set of 8 outgoing groups, denoted by numbers 401 to 408, relating to the first and last group. All the switching elements are connected with the control unit via a single bus 325. For instance, to connect any channel belonging to the first 8 incoming groups 301, ..., 308 to any one of the outgoing channels, the control unit normally establishes a connection between incoming and outgoing channels in the element to which the incoming channel belongs and inhibits the corresponding channels outgoing from the other elements.

The square connection matrix represented in Fig. 3 or the concentration stage of Fig. 4 are produced without any hinderances due to the use of the "expansion bit" of the control memories of each switching element, which allows the desired outgoing channels to be enabled or inhibited.

## Claims

1. A PCM switching element for a PCM exchange, to be controlled by an asynchronous control unit for executing connections by time slot conversions between incoming and outgoing serial PCM channels organized in frames, the switching element comprising:

— a serial-to-parallel converter (SP) for converting the bits of incoming channels from series to parallel,
— a signal memory (MS) for storing at least one frame of the parallel bits issued by the serial-to-parallel converter (SP),
— a control memory (MC) for storing information about the connections between incoming and outgoing channels,
— a parallel-to-serial converter (PS) for converting parallel bits of the outgoing channels read in the signal memory (MS) into the serial bits of the outgoing channels,
— a control logic (LC) able to receive and proess data and commands coming from the control unit,
— and a timing means (BT),

characterized in that the control memory (MC) is able to store per each outgoing channel an additional bit associated with said outgoing channel and sent by the control unit via the control logic (LC) which bit upon reading in the control memory (MC) inhibits, if showing a definite binary value, during the time slot of the associated outgoing channel the issuance of this channel by the parallel-to-serial converter (PS), and that the control logic (LC) delivers to the data input (18, 19) of the control memory (MC) the addresses (on 18) of the incoming channels and the additional bit (on 19), and delivers to the address input of the control memory (MC) the addresses (on 9) of the outgoing channels, the control logic (LC) comprising:

— a plurality of multiplexers (S1, S2, S3, S4) the outputs of which are connected to the data input (18) and the address input (9) of the control memory (MC) and the inputs of which are connected to terminals (7) of the timing means (BT) issuing sequential addresses, and to registers (R1, R2, R3, R4) connected to the control unit and buffering different parts of the addresses of the incoming and outgoing channels,
— a register (R5) storing the type of operation commanded by the control unit and to be carried out by the PCM switching element,
— and a circuit for the control of the multiplexers and for transfer of write pulses (on 11) into the control memory (MC), comprising a flip-flop (F7) storing the additional bit coming from the control unit, gates (P4, P5) controlling the transfer of the write pulses, and a decoder (D2) which depending on the code of the requested operation issues control signals on different lines and controls the flip-flop (F7) and the gates (P4, P5).

2. PCM switching element as in claim 1, characterized in that in said control logic (LC), for receiving the data and commands directly from the asynchronous control-unit on a parallel data-bus and ona control bus:

— the plurality of registers (R1, R2, R3, R4) memorize the data coming from the control unit and containing in order the identifications of the incoming group, of the incoming channel, of the outgoing group and of the outgoing channel;
— a 1-to-4-line demultiplexer (D1) enables said plurality of registers, in function of the code associated with the data coming from the control unit;
— a register (R5) stores the type of operation to be carried out by the PCM switching element;
— a control circuit for the inputs (P1, P2, P3, F1, F2), upon commands arriving from the control unit and meaning a transfer request of the data from the data bus (22) to the PCM switching element, generates in synchronism with the internal timing signals an enabling signal to data storage in said plurality of registers and in said register; and that the plurality of multiplexers (S1, S2, S3, S4) transfer to their outputs the data sent by said plurality of registers or the cyclical addresses sent by said timing means (BT), according to the operation to carry out, and the circuit for the control of said plurality of multiplexers and for the transfer of the write pulses into the control memory consists of the decoder (D2), which depending on the code of the requested operation sets a plurality of flip-flops (F3, F4, F5) to appropriate logic states, said flip-flops being capable of driving select inputs of said multiplexers through a combinational circuit (Q1, Q2, P7, P8, P9, P10), of a flip-flop (F6) capable of storing the codes of the operations requiring more than one writing in the control memory and of said flip-flop (F7) storing said additional bit present at an output of said register (R5), and also of the first and second gates (P4, P5) able to control the transfer of the write pulses into the control memory, and of a third gate (P6), able to reset said register (R5) in function of the type of operation carried out.

3. PCM switching element as in claim 2, characterized in that it comprises an initializing circuit, activated by a single control signal for inhibiting all the outgoing channels and consisting of a third flip-flop (F8), that stores said control signal and sends it to a synchronizing circuit (F9, F10, P11), that renders it as wide as and in phase with the timing period wherefrom it acts upon said first and second flip-flops (F6, F7) which causes: the additional bit to be stored at the logic state in which all outgoing channels are inhibited, at the output of the second gate (P5) to be present as many write pulses as are the cells of the control memory (MC), and the third and the fourth (S3, S4) of said plurality of multiplexers to be switched so as to transfer the addresses arriving from the timing means (BT).

4. PCM switching element as in claim 1, characterized in that said means (SP, PS) for converting the bits of incoming channels from serial to parallel and the bits of outgoing channels from parallel to serial are transposition matrices with a number of rows equal to the number of groups and a number of columns equal to the number of bits of each channel.

5. PCM switching element as in claims 1 or 2, characterized in that said control logic (LC) is designed to process data and commands arriving from a control unit consisting of a microprocessor.

6. PCM switching element as in claim 1, characterized in that it is made as an integrated circuit.

7. PCM switching element as in claim 1, characterized in that it is designed to be connected with other similar PCM switching elements to make a higher-capacity connecting matrix for sets of n incoming and m outgoing groups, which is organized in m rows and n columns and presents a single data and command bus (117) obtained by placing the buses of each element in parallel, and has the cross points between sets of rows and columns consisting of PCM switching elements having the inputs in parallel, if pertaining to the same column (EC1, EC2), and the outputs in parallel, if pertaining to the same row (EC3, EC4), said sets of groups consisting of as many groups as are the inputs or the outputs of an element.

8. PCM switching element as in claim 1, characterized in that it is designed to be connected with other similar PCM switching elements to make a concentration stage between p incoming groups and q outgoing groups, where the number of elements (EC5, EC6, EC7) is such that there are as many inputs as are the p incoming groups, wheras the q outgoing groups are obtained by placing in parallel as many corresponding outputs of different elements, and a data and control bus (325) of the concentration stage is obtained by placing in parallel the buses of each element.

9. Method of operating the PCM switching element of claim 2, characterized in that:

—to carry out a first connecting operation of any incoming channel with an outgoing one upon reception of an appropriate message from the control unit, a first and a fourth (S1, S4) of said plurality of multiplexers are switched in such a way that during the write phase the signals coming from a first and a fourth (R1, R4) of said plurality of registers are transferred to the control memory (MC), the additional bit coming from said register (R5) is stored in said second flip-flop (F7) and a single write pulse is presented at the output of said second gate (P5);

—to carry out a first disconnecting operation consisting of inhibiting any outgoing channel, a third and the fourth (S3, S4) of said plurality of multiplexers are switched during the write phase in control memory (MC) so as to transfer the signals arriving from a third and the fourth (R3, R4) of said plurality of registers, the additional bit stored in the second flip-flop is at a logic level corresponding to inhibiting the desired outgoing channel and at the output of said second gate (P5) a single write pulse is presented;

—to carry out a second disconnecting operation of all the outgoing channels, the third and the fourth (S3, S4) of said plurality of multiplexers transfer the addresses coming from said timing means (BT) during the write phase in control memory (MC), the additional bit, stored in the second flip-flop (F7) at a logic level corresponding to inhibiting, is written in all the cells of the control memory and at the output of the second gate there are presented as many write pulses as are the cells in control memory;

—to carry out a second connecting operation of any incoming channel with all the outgoing channels in the write phase the first and a second (S1, S2) of said plurality of multiplexers are switched so as to transfer the signals arriving from the first and second (R1, R2) of said plurality of registers and the third and fourth of said plurality of multiplexers are switched so as to transfer the addresses coming from said timing means, the additional bit stored in the second flip-flop (F7) allows all the outgoing channels to be enabled, and at the output of the second gate there are presented as many write pulses as are the cells in the control memory;

—to carry out a third connecting operation of all the incoming channels with all the corresponding outgoing channels, the first and fourth (S1, S4) of said plurality of multiplexers are switched so as to transfer during the write phase the addresses coming from said timing means (BT), the additional bit stored in the second flip-flop (F7) enables all the outgoing channels, and at the output of the second gate (P5) there are presented as many write pulses as are the cells in the control memory;

—to carry out a fourth connecting operation of all the channels of any incoming group with all the corresponding channels of any outgoing group, during the write phase the first and third (S1, S3) of said plurality of multiplexers are switched so as to transfer the signals coming from the first and third (R1, R3) of said plurality of registers, the second and fourth (S2, S4) of said plurality of multiplexers are switched so as to transfer the addresses arriving from those timing means (BT), the additional bit stored in the second flip-flop (F7) enables all the channels of the addressed outgoing group, and at the output of the second gate (P5) there are presented as many write pulses as are necessary to update the cells of the control memory (MC) corresponding to the channels of the outgoing group.

## Revendications

1. Elément de commutation MIC pour un central MIC, qui peut être commandé par une unité de commande asynchrone pour établir des connexions à travers l'échange d'intervalles de temps entre des voies sérielles MIC d'entrée et de sortie organisées en trames, l'élément de commutation comprenant:

—un convertisseur série- parallèle (SP) pour convertir de série en parallèle les bits des voies d'entrée,

—une mémoire des siganux (MS), pour mémoriser au moins une trame des bits en parallèle fournis par le convertisseur série-parallèle (SP),

—une mémoire de commande (MC), pour mémoriser des informations sur les connexions entre les voies d'entrée et de sortie,

—un convertisseur parallèle-série (PS), pour convertir les bits en parallèle des voies de sortie, lus dans la mémoire des signaux (MS), dans les bits en série des voies de sortie,

—une logique de commande (LC), pour recevoir et traiter les données et les commandes qui proviennent de l'unité de commande,

—et des circuits d'horloge (BT).

caractérisé en ce que la mémoire de commande (MC) est apte à mémoriser pour chaque voie de store un bit additionnel, associé à ladite voie de sortie et envoyé à l'unité de commande à travers la logique de commande (LC), ledit bit d'après la lecture dans la mémoire de commande (MC) empêche, s'il prend une valeur binaire determinée, que pendant l'intervalle de temps de la voie de sortie associée la voie même soit fournie par le convertisseur parallèle-série (PS), et en ce que la logique de commande (LC) fournit à l'entrée des données (18, 19) de la mémoire de commande (MC) les addresses des voies d'entrée (sur 18) et le bit additionel (sur 19), et fournit de même à l'entrée des addresses de la mémoire de commande (MC) les addresses des voies de sortie (sur 9), la logique de commande (LC) comprenant:

—une pluralité de multiplexeurs (S1, S2, S3, S4), dont les sorties sont connectées à l'entrée des données (18) et à l'entrée des addresses (9) de la mémoire de commande (MC) et dont les entrées sont connectées avec des terminaux (7) des circuits d'horloge (BT), qui fournissant des addresses séquentielles, et avec des registres (R1, R2, R3, R4) connectés à l'unité de commande pour mémoriser des parties différentes des adresses des voies d'entrée et de sortie,

—une registre (R5) qui mémorise le type d'opération commandé par l'unité de commande et à exécuter par l'élément de commutation MIC,

—et un circuit pour la commande des multiplexeurs et pour le transfert des impulsions d'écriture (sur 11) dans la mémoire de commande (MC), comprend une bascule (F7) qui mémorise le bit additionnel issu par l'unité de commande, des portes (P4, P5) commandant le transfert des impulsions d'écriture, et un circuit de décodage (D2), qui en fonction du code de l'opération demandée fournit des signaux de commande sur des lignes différentes et commande la bascule (F7) et les portes (P4, P5).

2. Elément de commutation MIC selon la revendication 1, caractérisé en ce que dans la logique de commande (LC), pour recevoir les données et les commandes directement de l'unité de commande asynchrone sur un bus de données parallèle et sur un bus de commandes:

—l'ensemble de registres (R1, R2, R3, R4) emmagasine les données qui arrivent de l'unité de commande et qui contiennent, dans l'ordre, les identifications du groupe d'entrée, de la voie d'entrée, du groupe de sortie et de la voie de sortie;

—un démultiplexeur d'une à quatre sorties (D1) valide au stockage cet ensemble de registres en fonctiuon du code associé aux données en arrivée de l'unité de commande;

—un registre (R5) emmagasine le type d'opération à effectuer par l'élément de commutation MIC;

—un circuit de commande des entrées (P1, P2, P3, F1, F2) d'après les commandes qui arrivent de l'unité de commande et qui indiquent la demande de transfert de données du bus de données (22) à l'élément de commutation MIC, engendre en synchronisme avec les siganux de rythme internes un signal de validation au stockage des données dans ledit ensemble de registres et dans ledit registre; et en ce que l'ensemble de multiplexeurs (S1, S2, S3, S4) transfère à ses sorties les données envoyées par ledit ensemble de registres ou les addresses cycliques fournies par le circuit d'horloge (BT), selon l'opération à effectuer, et le circuit pour la commande dudit ensemble de multiplexeurs et pour la commande du transfert des impulsions d'écriture dans la mémoire de commande est constitué par un circuit décodeur (D2), qui d'après le code de l'opération demandée positionne aux états logiques appropriés un ensemble de bascules (F3, F4, F5) capables de commander les entrées d'adressage dudit ensemble de multiplexeur au moyen d'un circuit combinatoire (Q1, Q2, P7, P8, P9, P10), par une première bascule (F6) capable d'emmagasiner les codes des opérations que nécessitent plus d'une écriture dans la mémoire de commande, et par ladite bascule (F7) capable d'emmagasiner ledit bit additionnel présent à une sortie dudit registre (R5), une première et une deuxième porte (P4, P5) pour la commande du transfert des impulsions d'écriture dans la mémoire de commande, et une trosième porte (P6) pour la remise à zéro dudit registre (R5) en fonction du type d'opération effectuée.

3. Elément de commutation MIC selon la revendication 2, caractérisé en ce qu'il comporte un circuit d'initialisation, activé par un seul signal de commande pour l'inhibition de toutes les voies de sortie et constitué par une troisième bascule (F8) qui emmagasine ce signal de commande et qui l'envoie à un circuit de synchronisation (F9, F10, P11) qui lui donne une durée égale à la période d'horloge et la même phase, et qui, en agissant sur la première et la deuxième bascule (F6, F7), provoque le stockage du bit additionnel dans l'état logique où toutes les voies de sortie sont inhibées, il apparaît à la sortie de la deuxième porte (P5) autant d'impulsions d'écriture qu'il y a de positions dans la mémoire de commande (MC), et le troisième et le quatrième multiplexeur (S3, S4) dudit ensemble de multiplexeurs sont commandés de façon à transférer les adresses provenant dudit circuit d'horloge (BT).

4. Elément de commutation MIC selon la revendication 1, caractérisé en ce que lesdits moyens (SP, PS) pour la conversion série-parallèle de bits des voies d'entrée et pour la conversion parallèle-série des bits des voies de sortie sont des matrices de transposition ayant un nombre de lignes égal au nombre des groupes et un nombre de colonnes égal au nombre de bits de chaque voie.

5. Elément de commutation MIC selon 'es revendications 1 ou 2, caractérisée en ce que la logique de commande (LC) est capable de traiter les données et les commandes provenant d'une unité de commande constituée par un microprocesseur.

6. Elément de commutation MIC selon la revendication 1, caractérisé en ce qu'il est réalisé sous la forme d'un circuit intégré.

7. Elément de commutation MIC selon la revendication 1, caractérisé en ce qu'il est conçu pour être connecté à d'autres éléments similaires pour constituer une matrice de connexion de capacité plus grande pour des ensembles de $n$ groupes d'entrée et $m$ groupes de sortie, qui est organisée em $m$ lignes et $n$ colonnes et qui présente un seul bus de données et de commandes (117), obtenu en mettant en parallèle les bus de chaque élément, et dans laquelle les points de croisement entre ensembles de lignes et ensembles de colonnes sont réalisés par des éléments de commutation MIC ayant leurs entrées en parallèle s'ils font parties de la même colonne (EC1, EC2) et leurs sorties en parallèle s'ils font parties de la même ligne (EC3, EC4), lesdits ensembles de groupes étant constitués par autant de groupes qu'il y a d'entrées ou de sorties dans un élément.

8. Elément de commutation MIC selon la revendication 1, caractérisé en ce qu'il est conçu pour être connecté à d'autres éléments similaires pour constituer un organe de concentration entre $p$ groupes d'entrée et $q$ groupes de sortie, dans lequel le nombre des éléments (EC5, EC6, EC7) est tel qu'il y a autant d'entrées que les $p$ groupes d'entrée, tandis que les $q$ groupes de sortie sont obtenus en mettant en parallèle le même nombre de sorties correspondantes de différents éléments, et dans lequel le bus de données et de commandes (325) de l'organe de concentration est obtenu en mettant en parallèle les bus de chaque élément.

9. Procédé pour actionner l'élément de commutation MIC selon la revendication 2, caractérisé en ce que:

— pour effectuer une première opération de connexion entre n'importe quelle voie d'entrée et une voie de sortie lors de la réception d'un message approprié issu de l'unité de commande, un premier et un quatrième multiplexeur (S1, S4) dudit ensemble de multiplexeurs sont commutés de telle façon qu'au cours de la phase d'écriture les signaux provenant d'un premier et d'un quatrième registre (R1, R4) dudit ensemble de registres puissent être transférés à la mémoire de commande, ledit bit additionnel envoyé par le registre (R5) est emmagasiné dans le deuxième bascule (F7), et une seule impulsion d'écriture est présente à la sortie de la deuxième porte (P5);

— pour effectuer une première opération de déconnexion, c'est-à-dire d'inhibition de n'importe quelle voie de sortie, une troisième et le quatrième multiplexeur (S3, S4) dudit ensemble de multiplexeurs sont commutés au cours de la phase d'écriture dans la mémoire de commande (MC) de façon à transférer les signaux issus d'un troisième et du quatrième registre (R3, R4) dudit ensemble de registres, le bit additionnel emmagasiné dans la deuxième bascule est à un niveau logique correspondant à l'inhibition de la voie de sortie désirée, et un seule impulsion d'écriture est présente à la sortie de la deuxième porte (P5);

— pour effecteur une deuxième opération de déconnexion de toutes les voies de sortie, le troisième et le quatrième multiplexeur (S3, S4) dudit ensemble de multiplexeurs transférent les adresses issues du circuit d'horloge (BT) pendant la phase d'écriture dans la mémoire de commande (MC), le bit additionnel emmagasiné dans la deuxième bascule (F7) à un niveau logique correspondant à l'inhibition est écrit dans toutes les positions de la mémoire de commande, et il apparaît à la sortie de la deuxième porte autant d'impulsions d'écriture qu'il y a de positions dans la mémoire de commande;

— pour effectuer une deuxième opération de connexion entre n'importe quelle voie d'entrée et toutes les voies de sortie, pendant la phase d'écriture le premier et le deuxième multiplexeur (S1, S2) dudit ensemble de multiplexeurs sont commutés de façon à transférés les signaux provenant du premier et du deuxième (R1, R2) dudit ensemble de registres et le troisième et le quatrième dudit ensemble de multiplexeurs sont commutés de façon à transférer les adresses provenant dudit circuit d'horloge, le bit additionnel emmagasiné dans la deuxième bascule (F7) valide toutes les voies de sortie, et il apparaît à la sortie de la deuxième porte autant d'impulsion d'écriture qu'il y a de position dans la mémoire de commande;

— pour effectuer une troisième opération de connexion entre toutes les voies d'entrée et toutes les voies correspondantes de sorties, le premier et le quatrième multiplexeur (S1, S4) dudit ensemble de multiplexeurs sont commutées de façon à transférer pendant la phase d'écriture les adresses provenant du circuit d'horloge (BT), le bit additionnel emmagasiné dans la deuxième bascule (F7) valide toutes les voies de sortie, et il apparaît à la sortie de la deuxième porte (P5) autant d'impulsions d'écriture qu'il y a de positions dans le mémoire de commande;

— pour effectuer une quatrième opération de connexion entre toutes les voies de n'importe quel groupe d'entrée et toutes les voies correspondantes de n'importe quel groupe de sortie, pendant la phase d'écriture le premier et le troisième multiplexeur (S1, S3) dudit ensemble de multiplexeurs sont commutés de façon à transférer les signaux provenant du premier et du troisième registre (R1, R3) dudit ensemble de registres, le deuxième et le quatrième (S2, S4) multiplexeur dudit ensemble de multiplexeurs sont commutés de façon à transférer les adresses provenant du circuit d'horloge (BT), le bit additionnel emmagasiné dans la deuxième bascule (F7) valide toutes les voies du groupe de sortie adressé, et il apparaît à la sortie de la deuxième porte (P5) autant d'impulsions d'écriture qu'il est nécessaire pour mettre à jour les positions de la mémoire de commande (MC) correspondant aux voies du groupe de sortie.

**Patentansprüche**

1. PCM-Koppelelement für eine PCM-Vermittlungsstelle für die Steuerung durch eine asynchrone Steuereinheit zur Erstellung von Verbindungen durch Zeitlagenumsetzungen zwischen ankommenden und abgehenden seriellen PCM-Kanälen, die in Rahmen organisiert sind, wobei das Koppelelement folgende Einzelschaltungen enthält:

—einen Serien/Parallen-Wandler (SP) zur Serien/Parallel-Umwandlung der Bits der ankommenden Kanäle,
—einen Signalspeicher (MS) zum Speichern wenigstens eins Rahmens der vom Serien/Parallel-Wandler (SP) ausgegebenen parallelen Bits,
—einen Steuerspeicher (MC) zum Speichern von Informationen über die Verbindungen zwischen ankommenden und abgehenden Kanälen,
—einen Parallel/Serien-Wandler (PS) zum Umwandeln von im Signalspeicher (MS) gelesenen parallelen Bits der abgehenden Kanäle in serielle Bits der abgehenden Kanäle,
—eine Steuerlogik (LC), die von der Steuereinheit kommende Daten und Befehle empfangen und verarbeiten kann,
—und einze Zeitsteuereinrichtung (BT),

dadurch gekennzeichnet, daß der Steuerspeicher (MC) je abgehenden Kanal ein zusätzliches Bit speichern kann, das diesem abgehenden Kanal zugeordnet ist und von der Steuereinheit über die Steuerlogik (LC) gesendet wird und das, wenn es im Steuerspeicher (MC) gelesen wird, soferen es einen definierten binären Wert aufweist, während der Zeitlage des zugeordneten abgehenden Kanals die Ausgabe dieses Kanals durch de Parallel/Serien-Wandler (PS) sperrt, und daß die Steuerlogik (LC) an den Dateneingang (18, 19) des Steuerspeichers (MC) die Adressen (auf 18) der ankommenden Kanäle und das zusätzliche Bit (auf 19) und an den Adresseneingang des Steuerspeichers (MC) die Adressen (auf 9) der abgehenden Kanäle liefert und folgende Einzelschaltungen enthält:

—eine Mehrzahl von Multiplexern (S1, S2, S3, S4), deren Ausgänge mit dem Dateneingang (18) und dem Adresseneingang (9) des Steuerspeichers (MC) verbunden sind und deren Eingänge mit Anschlüssen (7) der sequentielle Adressen abgebenden Zeitsteuereinrichtung (BT) einerseits und mit Registern (R1, R2, R3, R4), die mit der Steuereinheit verbunden sind und verschiedene Teile der Adressen der ankommenden und abgehenden Kanäle pufferspeichern, andererseits verbunden sind,
—ein Register (R5), das die Art der von der Steuereinheit befohlenen und vom PCM-Koppelelement durchzuführenden Operation speichert,
—und eine Schaltung für die Steuerung der Multiplexer und für die Übertragung von Schreibimpulsen (auf 11) in den Steuerspeicher (MC), mit einem das zusätzliche von der Steuereinheit kommende Bit speichernden Flip-flop (F7), die Übertragung der Schreibimpulse steuernden Toren (P4, P5) und einem Dekoder (D2), der in Abhängigkeit vom Kode der geforderten Operation Steuersignale auf verschiedenen Leitungen ausgibt und den Flip-Flop (F7) und die Tore (P4, P5) steuert.

2. PCM-Koppelelement nach Anspruch 1, dadurch gekennzeichnet, daß in der Steuerlogik (LC) zum Empfangen der Daten und Befehle unmittelbar von der asynchronen Steuereinheit auf einem parallelen Datenbus und auf einem Steuerbus:

—die mehreren Register (R1, R2, R3, R4) die von der Steuereinheit kommenden und in einer Reihenfolge die Identifizierungen des Ankommenden Bündels, des ankommenden Kanals, des abgehenden Bündels und des abgehenden Kanals enthaltenden Daten speichern;
—ein 1:4-Leitungs-Demultiplexer (D1) die Register in Abhängigkeit von dem Kode, der den von der Steuereinheit kommenden Daten zugeordnet ist, in Funktion setzt;
—ein Register (R5) die vom PCM-Koppelelement durchzuführende Art der Operation speichert;
—eine Steuerschaltung für die Eingänge (P1, P2, P3, F1, F2) auf Befehle hin, die von der Steuereinheit eintreffen und eine Anforderung für den Datentransfer von Datenbus (22) zum PCM-Koppelelement bedeuten, in Synchronismus mit den internen Zeitsteuersignalen ein Einschaltsignal für die Datenspeicherung in den Registern und dem einzelnen Register erzeugt; und die Merhzahl der Multiplexer (S1, S2, S3, S4) zu ihren Ausgängen die von den Registern gesendeten Daten oder die von der Zeitsteuereinrichtung (BT) gesendeten zyklischen Adressen entsprechend der durchzuführenden Operation durchschalten, und die Schaltung für die Steuerung der Multiplexer und für den Transfer von Schreibimpulsen in den Steuerspeicher aus dem Dekoder (D2), der in Abhängigkeit vom Kode der geforderten Operation eine Mehrzahl von Flip-Flops (F3, F4, F5), die die Wähleingänge der Multiplexer über eine Verknüpfungsschaltung (Q1, Q2, P7, P8, P9, P10) ansteuern, auf entsprechende logische Zustände stellt, aus einem Flip-Flop (F6), der die Kodes der mehr als einen Schreibvorgang im Steuerspeicher erfordernden Operationen speichert, aus dem Flip-Flop (F7), der das an einem Ausgang des Registers (R5) vorliegende zusätzliche Bit speichert, und aus einem ersten und einem zweiten Tor (P4, P5), die den Transfer der schreibimpulse in den Steuerspeicher steuern, sowie einem dritten Tor (P6), das das Register (R5) in Abhängigkeit von der Art der durchgeführten Operation zurückstellt, besteht.

3. PCM-Koppelelement nach Anspruch 2, dadurch gekennzeichnet, daß es eine Ingangsetzungsschaltung umfaßt, die von einem einzelnen Steuersignal zum Sperren aller abgehenden Kanäle aktiviert wird und aus einem dritten Flip-Flop (F8) besteht, der das Steuersignal speichert und es zu einer Synchronisationsschaltung (F9, F10, P11) sendet, die es auf die Breite und Phase der Zeitsteuerperiode bringt und von der aus es auf den ersten Flip-Flop (F6) un den zweiten Flip-Flop (F7) einwirkt, was bewirkt, daß das zusätzliche Bit im logischen Zustand gespeichert wird, in dem alle ausgehenden Kanäle gesperrt sind, und daß am Ausgang des zweiten Tors (P5) so viele Shreibimpulse auftreten, als Zellen des Steuerspeichers (MC) vorhanden sind, und der dritte Multiplexer (S3) ud der vierte Multiplexer (S4) so geschaltet sind, daß die von der Zeitsteuereinrichtung (BT) eintreffenden Andressen durchgelassen werden.

4. PCM-Koppelelement nach Anspruch 1, dadurch gekennzeichnet, daß die Einrichtungen (SP, PS) zur Serien-Parallel-Umsetzung der Bits der ankommenden Kanäle und zur Parallel-Serien-Umsetzung der Bits der abgehenden Kanäle Transpositionsmatrizen mit einer Zeilenzahl gleich der Zahl der Bündel und einer Spaltenzhal gleich der Zahl der Bits je Kanal sind.

5. PCM-Koppelelement nach den Ansprüchen 1 oder 2, dadurch gekennzeichnet, daß die Steuerlogik (LC) zum Verarbeiten von von einer aus einem Mikroprozessor bestehenden Steuereinheit kommenden Daten und Befehle entworfen ist.

6. PCM-Koppelelement nach Anspruch 1, dadurch gekennzeichnet, daß es aus einem integrierten Schaltkreis besteht.

7. PCM-Koppelelment nach Anspruch 1, dadurch gekennzeichnet, daß es mit weiteren gleichen PCM-Koppelelementen zur Bildung einer Verbindungsmatrix höherer Kapazität für Systeme von n ankommenden und m abgehenden Bündeln zusammenschaltbar ist, die in m Zeilen und n Spalten organisiert ist und eine einzige Daten- und Befehls-Sammelleitung (117) aufweist, die durch Parallelanordnung der Sammelleitungen aller Elemente erhalten wird und Kreuzungspunkte zwischen den Systemen von Zeilen und Spalten hat, bestehend aus PCM-Schaltelementen mit parallelen Eingängen, wenn sie zur selben Spalte (EC1, EC2) gehören, und mit parallelen Ausgängen, wenn sie zur selben Zeile (EC3, EC4) gehören, wobei die System von Bündeln aus so vielen Bündeln bestehen, als es Eingänge oder Ausgänge jedes Elements dibt.

8. PCM-Koppelelement nach Anspruch 1, dadurch gekennzeichnet, daß es mit anderen gleichen PCM-Koppelelementen zur Bildung einer Konzentrationsstufe zwischen p ankommenden Bündeln und q abgehenden Bündeln zusammenschaltbar ist, wobei die Zahl der Elemente (EC5, EC6, EC7) so ist, daß es so viele Eingänge wie die p ankommende Bündel gibt, während die q abgehenden Bündel durch Parallelanordnung ebenso vieler entsprechender Ausgänge verschiedener Elemente erhalten werden, und ein Daten- und Steuer-Bus (325) der Konzentrationsstufe durch Parallelanordnung der Busse aller Elemente erhalten wird.

9. Verfahren zum Betreiben eines PCM-Koppelelements nach Anspruch 2, dadurch gekennzeichnet, daß

—zur Durchführung einer ersten Verbindungsoperation eines beliebigen ankommenden Kanals mit einem abgehenden Kanal bei Empfang einer entspechenden Nachricht von der Steuereinheit ein erster Multiplexer (S1) und ein vierter Multiplexer (S4) aus der Mehrzahl von Multiplexern so geschaltet werden, daß während der Schreibphase die von einem ersten Register (R1) und von einem vierten Register (R4) aus der Mehrzahl von Registern kommenden Signale zum Steuerspeicher (MC) durchgeschaltet werden, und das zusätzliche vom einzelnen Register (R5) kommende Bit im zweiten Flip-Flop (F7) gespeichert wird und ein einzelner Schreibimpuls am Ausgang des zweiten Tors (P5) abgegeben wird;

—zur Durchführung einer ersten Auslöseoperation, die aus dem Sperren eins beliebign abgehenden Kanals besteht, ein dritter Multiplexer (S3) un der vierte Multiplexer (S4) aus der Mehrzahl von Multiplexern während der Phase des Schreibens im Steuerspeicher (MC) so geschaltet werden, daß die von einem dritten Register (R3) und vom vierten Register (R4) eintreffenden Signale durchgeschaltet werden, und das im zweiten Flip-Flop gespeicherte zusätzliche Bit sich auf einem dem Sperren des gewünschten abgehenden Kanals entsprechenden logischen Pegel befindet und am Ausgang des zweiten Tors (P5) ein einzelner Schreibimpuls abgegeben wird;

—zur Durchführung einer zweiten Auslöseoperation aller abgehenden Kanäle der dritte Multiplexer (S3) und der vierte Multiplexer (S4) die von der Zeitsteuereinrichtung (BT) während der Phase des Schreibens im Steuerspeicher (MC) kommenden Adressen durchschalten und das im zweiten Flip-Flop (F7) auf einem dem Sperren entsprech-enden logischen Pegel gespeicherte zusätz-liche Bit in alle Zellen des Steuerspeichers geschreiben wird und am Ausgang des zweiten Tors so viele Schreibimpulse auftreten, als Zellen im Steuerspeicher verhanden sind;

—zur Durchführung einer zweiten Verbind-ungsoperation eines beliebigen ankom-menden Kanals mit allen abgehenden Kanälen während der Schreibphase der erste Multiplexer (S1) und der zweite Multiplexer (S2) so geschaltet werden, daß die vom ersten Register (R1) und vom zweiten Register (R2) eintreffenden Signale durchgeschaltet werden, und der dritte Multiplexer und der vierte Multiplexer so geschaltet werden, daß die von der Zeitsteuerein-richtung kommenden Adressen durchge-schaltet werden, und das im zweiten Flip-Flop (F7) gespeicherte zusätzliche Bit ermöglicht, daß alle abgehenden Kanäle durchgeschaltet werden, und am Ausgang des zweiten Tors so viele Schreibimpulse auftreten, als Zellen im Steuerspeicher vorhanden sind;

—zur Durchführung einer dritten Verbindungsoperation aller ankommenden Kanäle mit allen entsprechenden abgehenden Kanälen der erste Multiplexer (S1) und der vierte Multiplexer (S4) so geschaltet werden, daß während der Schreibphase die von der Zeitsteuereinrichtung (BT) kommenden Adressen durchgeschaltet werden, während das im zweiten Flip-Flop (F7) gespeicherte zusätzliche Bit alle abgehenden Kanäle durchschaltet und am Ausgang des zweiten Tors (P5) so viele Schreibimpulse auftreten, als Zellen im Steuerspeicher vorhanden sind;

—zur Durchführung einer vierten Verbindungsoperation aller Kanäle eines beliebigen ankommenden Bündels mit allen entsprech-enden Kanälen eines beliebigen abge-henden Bündels während der Schreibphase der erste Multiplexer (S1) und der dritte Multiplexer (S3) so geschaltet werden, daß die vom ersten Register (R1) und vom dritten Register (R3) kommenden Signale durchgeschaltet werden, und der zweite und der vierte Multiplexer (S2, S4) so geschaltet werden, daß die von der Zeitsteuereinrich-tung (BT) kommenden Adressen durchge-schaltet werden, während das im zweiten Flip-Flop (F7) gespeicherte zusätzliche Bit alle Kanäle des adressierten abgehenden Bündels durchschaltet und am Ausgang des zweiten Tors (P5) so viele Schreibimpulse auftreten, als zum Fortschreiben der den Kanälen des abgehenden Bündels entsprechenden Zellen des Steuerspeichers (MC) erforderlich sind.

Fig. 1

0 039 948

Fig. 2

Fig. 3

Fig.4